# EUROPEAN PATENT APPLICATION

(11) **EP 1 787 867 A1**
(43) Date of publication of application: **23.05.2007**
(21) Application number: 06380284.7
(22) Date of filing: 08.11.2006
(51) Int. Cl.: B60R 13/00

(54) **Luminous emblems visible during diurnal and nocturnal visibility conditions**

(30) Priority: 10.11.2005 ES 200502736
(71) Applicant: Zanini Auto Grup, S.A., 08150 Parets del Vallés (ES)
(72) Inventor: Caldés Sabanes, José, 08017 Barcelona (ES); Mayer Pujades, Augusto, 08190 Sant Cugat Del Vallés Barcelona (ES); Cuesta-Unkhoff, Pedro, 08150 Parets del Vallés Barcelona (ES)
(74) Representative: Ungria Lopez, Javier

(57) **Abstract**

They have a special application in the automotive sector to illuminate different informational parts such as commercial marks, models, logos and other identifying signs.

These informational signs are presented in eye-catching finishings easy to see with any type of finishings.

According to the present invention they entail a support body (5) made of transparent plastic material on which anterior or posterior faces a series of reliefs or unevenness of the surface on which colors of all types of surface finishings will be applied according to the current state of the art and using, mainly, metallization techniques implemented by physical means (PVD), that entail applying a fine layer (4) (in the nanometer order) that offers a metallic finishing when light incides on it, and in the absence of such natural light it acquires the color of a luminous source (6) placed in its anterior face and located in the appropriate housing structure (7).

The surface that is not wholly occupied by the luminous motif (2) is completely opaque.

## Description

### OBJECT OF THE INVENTION

The present invention, according to the title of this descriptive memory, refers to luminous emblems visible during diurnal and nocturnal visibility conditions, that are of especial application to the automotive sector, although they could be equally applied to other sectors, and which novel characteristic resides in that they are visible both during the day and at night.

The automotive sector incorporates several informational parts to the vehicles that identify the manufacturer, model and other characteristics of the vehicle.

Currently, the information carried by the emblems are presented in eye-catching finishings and easy to see , and therefore, in most of the cases the emblems attached to the vehicles display the shiny finishing of chromium plating obtained by galvanizing bathing techniques and, in some of the cases, is combined with colors that highlight the emblem even more.

### BACKGROUND OF THE INVENTION

The emblems currently used in the industry are visible while there is day light, but they are not visible at night due to the scarcity or absence of natural light, which prevents the interpretation of said emblem. Also, it is impossible to illuminate said emblems by means of a source of light located in their posterior face, since their finishing is completely opaque.

To obtain the luminous emblem that is the object of the present invention, the PVD technique (Physical Vapor Deposition) is used. Said technique is based in the metallization by physical methods used in a variety of industrial sectors, such as faucetry, to provide the finishing for a part, or used in a wide variety of commercial sectors such as the coating of parts by applying several coats that lend it a considerable hardness in the area subjected to greater wear provoked by the friction they endure during normal use.

The impulse in the development of PVD coatings (Physical Vapor Deposition) that occurred during the 1970's was aimed at depositing very hard layers to enhance wear resistance. These layers are made from ceramic compounds. The compound that reached the most widespread popularity was TiN (Titanium nitride). Its golden color lead to high expectations in the field of decorative applications: beside the attractiveness of the color it has a high surface hardness. In that manner began the deposition of the PVD layers, as sole layer or as complementary layer to those obtained by galvanization, electrolytic or chemical processes.

From the various PVD techniques used industrially, the electrical arc PVD and cathode ray atomization PVD (or Sputtering) are the most notably used in the decoration sectors. There is also a possibility of reactors that alternate both techniques. The evaporation media during the coating stage is always physical, and hence the generic denomination in the name of the technique: physical vapor deposition.

The difference between the techniques is based in the system used to evaporate the metal or the compound to be deposited. If the evaporation system is produced by the effect of an electrical arc that moves over the metal (cathod), it is called arc evaporation. If the evaporation occurs by bombarding the metal or the ceramic material (in this case the target or cathode does not have to be necessarily metallic) with a gas ion beam, the technique is called Sputtering. Ionization can be optimized by means of magnetic fields (magnetron) applied over the target.

Once the reactive ions have been generated the gases are introduced at a very low pressure to form the compounds. To focus them towards the parts, a electrical potential difference (continuous or pulsating) is applied between the parts and the reactor chamber.

These techniques are mistaken, on occasion, with chemical bath, electrolytic or galvanization treatments done in open facilities. The facilities where PVD is applied are air-tight, coat at very low pressures and the reaction is obtained by ionizing the reactives (plasma state). Except for some exceptional facility, these processes are done in a discontinuous manner. Given the nature of the work conditions required for this process they are considered clean and respectful towards the environment.

Although it is possible to obtain metallizations in a vacuum with current PVD facilities, the reactivity of gases and metals to obtain the specific desired compound is always associated with the PVD coating process.

The technological development of PVD coating in the decorative sector has been focused on obtaining new coverings with different textures and colors (old gold hues, and cobalt gold are some of the better known), coating of new materials (bronze, brass, zamack, plastic) and especially on obtaining reproducibility of the color, shine, tone and adherence of each process. Contrary to the coating of functional parts, where hardness, low friction coefficient and adherence are the significant properties (cutting tools, molds, dies, etc.), the esthetic aspects are the important aspects in decorative PVD. Reproducibility is obtained by a strict control of the parameters used in each PVD coating technique, whichever it may be.

### DESCRIPTION OF THE INVENTION

Generally, luminous emblems visible during diurnal and nocturnal visibility conditions, manufactured according to the present invention, incorporate over the desired surface a very thin layer of metal (in the nanometer order), achieving a finishing that is visible under natural light and in the dark, since it allows the passage of light projected by a luminous source located in its posterior face.

Any type of metal, organic or inorganic product can be used, as well as a source of light of any color depending on the final desired effect.

To obtain these type of emblems, the process is initiated with a piece of transparent or translucid plastic that will be used as the anterior or posterior face of the emblem. The metallic finish or any other surface finishings, which are visible equally during the day or at night, and the opaque finish that will allow viewing the silhouette or the motif, will be applied on either the anterior or the posterior face. The plastic piece is the frontal part of a plastic housing body that has the aforementioned source of light mounted inside it, and that will be activated by the vehicle's user.

The internal or external face of said transparent plastic piece is coated using the PVD coating technique, with a metal layer which thinness and porosity allow the passage of the light projected by the source of light located in the posterior face, but that at first glance resembles a completely opaque metallized surface that in the absence of light can acquire the color of said source of light.

The technique employed to apply the metallic layer is PVD coating, a technique that allows depositing very hard layers to enhance the wear resistance, such as is the case in the coating for kitchen implements, construction, costume jewellery (clock-work components), biomaterials, and ornamentation in general. This technique is done at low pressures in a reactor, in which after the pieces or parts to be coated have been heated, degasified and ionically stripped, the material is deposited on them by means of electrical arc or cathodic sputtering in an inert atmosphere, and lastly, they are cooled and unloaded. The materials used depend on the desired texture and colors.

The evaporation media during unloading is always physical, hence the generic name of Physical Vapor Deposition, as mentioned before.

The transparent part can have an opaque drawing on its inner or outer face that can also carry a series of reliefs. This inner or outer face is coated by sputtering with a layer of metal having a sufficiently fine thickness and porosity to generate the optical effect of being, during diurnal light conditions, an opaque metallic surface, but that otherwise allows the passage of light, acquiring then the color of the source of light placed in the posterior part. This allows the emblems to be visible and to shine independently of the nature of the light that incides on them, or even in the absence of light, due to the passage of light from the luminous source mounted inside it and that goes through the fine metallic layer.

To facilitate the understanding of the characteristics of the invention, we have attached to this descriptive report and as an integral part of it, a sheet with the drawings that depict the invention. These figures have an illustrative but not limiting character of the following characteristics:

### BRIEF DESCRIPTION OF THE DRAWINGS

**Figure 1**: shows a plant view of a luminous emblem that can be viewed during diurnal and nocturnal light conditions, according to the present invention.
**Figure 2**: shows a cross section of the view displayed in Figure 1.
**Figure 3**: shows a detail from a section of the transparent plastic part to which the fine metal layer has been applied, showing also, schematically the position of the source of light that serves to illuminate it at night.

### DESCRIPTION OF THE PREFERRED EMBODIMENT

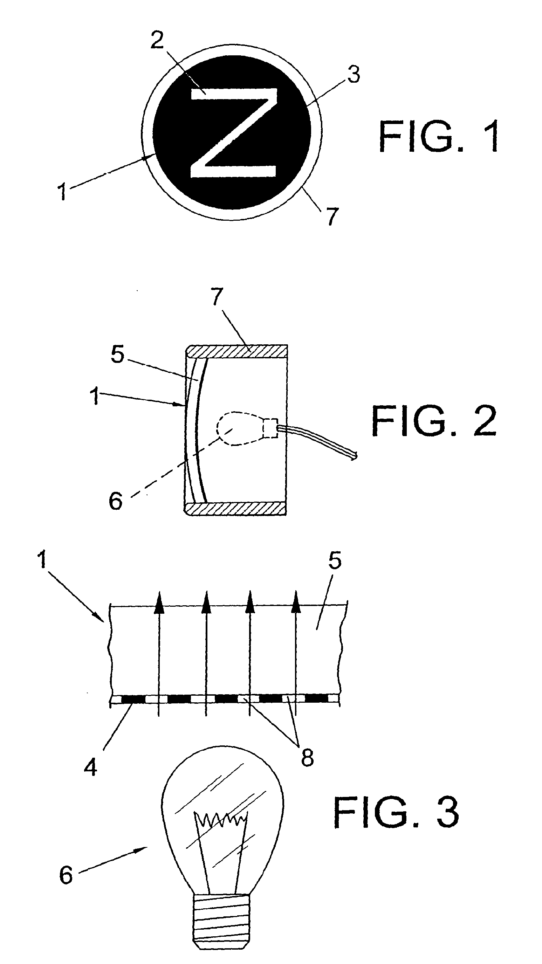

Figure 1 shows a luminous emblem visible during diurnal and nocturnal visibility conditions, according to the present invention, where the decorative motif is a "Z". The piece of transparent plastic, already finished, that defines the luminous emblem is referenced as 1 and the metallic motive that will be illuminated is referenced as 2. The opaque area that covers the rest of the circular surface of the transparent piece 1 is referenced as 3.

Figure 3 shows, in a large scale, element 4 or the fine layer of metallic material located in the posterior face of plastic support body 5. The source of light 6 is shown schematically in this figure.

Figure 2 shows a diameter section view of the entire luminous emblem assembly, the source of light 6 located inside the housing structure 7, which frontal part is the transparent piece of plastic 5, with the metallic layer 4 applied and the opaque area 3.

When the source of light 6 that serves to illuminate the luminous emblem 1 during nocturnal visibility conditions is connected, the light that it emits goes through the pores 8 of the fine metallic layer 4 as seen schematically in Figure 3.

The anterior or posterior faces of the transparent plastic support structure 5, may have small reliefs or unevenness of surface that can be used to obtain different finishing effects or colors. Without ruling out other finishings, the most important color is the metallic color used currently and that has not been yet used in this field.

The emblem shows thus a metallic finish when natural daylight incides on it, but in the absence of inciding daylight, the emblem shows the color of the source of light 6, that is then framed by the painted areas 3 that are completely opaque. At night the emblem is yet more visible than during the day, since the desired area is illuminated without losing the metallic or chromeplated aspect while respecting the current legislation.

## Claims

1. **LUMINOUS EMBLEMS VISIBLE DURING DIURNAL AND NOCTURNAL VISIBILITY CONDITIONS, characterized in that** they are configured by a support structure (5) made of transparent plastic material, that may present reliefs or changes in the evenness of the surface on its anterior or posterior faces on which different finishings or colors may be applied in a fine layer (4), offering a metallic finishing when daylight incides on it, and in the absence of such natural light, they acquire the color of a source of light (6) installed in its posterior face and enclosed in the corresponding housing body (7), that is located in the completely opaque areas (3) of the supporting structure (5) made of transparent plastic.

2. **LUMINOUS EMBLEMS VISIBLE DURING DIURNAL AND NOCTURNAL VISIBILITY CONDITIONS,** according to Claim 1, and
**characterized in that** the inner or outer layer of the support body (5) made of transparent plastic material has been coated with a thin metal layer (4) using the PVD technique and has a porosity such that allows the passage of the light projected by the source of light (6) placed on its posterior face.
